# EUROPÄISCHE PATENTSCHRIFT

(11) **EP 3 256 356 B1**
(45) Veröffentlichungstag und Bekanntmachung des Hinweises auf die Patenterteilung: **02.01.2019**
(21) Anmeldenummer: 16703966.8
(22) Anmeldetag: 09.02.2016
(51) Int. Cl.: B60T 13/66, B60T 13/68

(54) **ELEKTROPNEUMATISCHE BETRIEBSBREMSEINRICHTUNG EINES FAHRZEUGS MIT GERÄUSCHREDUZIERUNG BEIM BREMSLÖSEN SOWIE VERFAHREN ZU IHRER STEUERUNG**
ELECTRO-PNEUMATIC SERVICE BRAKE DEVICE OF A VEHICLE WITH NOISE REDUCTION DURING BRAKE RELEASE AND METHOD FOR THE CONTROL THEREOF
DISPOSITIF DE FREIN DE SERVICE ÉLECTROPNEUMATIQUE D'UN VÉHICULE À RÉDUCTION DU BRUIT LORS DU RELÂCHEMENT DU FREIN AINSI QUE SON PROCÉDÉ DE COMMANDE

(30) Priorität: 13.02.2015 DE 102015102133
(43) Veröffentlichungstag der Anmeldung: 20.12.2017
(73) Patentinhaber: KNORR-BREMSE Systeme für Nutzfahrzeuge GmbH, 80809 München (DE)
(72) Erfinder: HERGES, Michael, 80935 München (DE); SCHÖNECK,Markus, 74388 Talheim (DE)
(86) Internationale Anmeldenummer: PCT/EP2016/052750
(87) Internationale Veröffentlichungsnummer: WO 2016/128417

(56) Entgegenhaltungen:
- DE-A1-102011 083 171
- DE-A1-102013 007 881
- DE-A1-102015 108 142

## Beschreibung

Die Erfindung geht aus von einem Verfahren zum Steuern einer elektropneumatischen Betriebsbremseinrichtung eines Fahrzeugs, bei welchem ausgehend von einem wenigstens teilweise zugespannten Zustand der Betriebsbremse ein zum wenigstens teilweisen Lösen der Betriebsbremse zu erzielender Soll-Lösebremsdruck mittels wenigstens eines elektropneumatischen Druckstellers in wenigstens einem pneumatischen Betriebsbremszylinder hergestellt wird, wobei das Herstellen des Soll-Lösebremsdrucks in dem wenigstens einen pneumatischen Betriebsbremszylinder unter einem Druckgradienten erfolgt, gemäß dem Oberbegriff von Anspruch 1.

Außerdem geht die Erfindung aus von einer elektropneumatischen Betriebsbremseinrichtung eines Fahrzeugs, mit wenigstens einem elektrischen Betriebsbremswertgeber, einem zentralen elektronischen Steuergerät, wenigstens einem, ein lokales elektronisches Steuergerät beinhaltenden elektropneumatischen Drucksteller sowie wenigstens einem pneumatischen Betriebsbremszylinder, wobei der elektrische Betriebsbremswertgeber auf eine Bremslöseanforderung hin ein Bremslösesignal an das zentrale Steuergerät sendet, welches gemäß dem Bremslösesignal ein einen Soll-Lösebremsdruck repräsentierendes Signal für das lokale Steuergerät des wenigstens einen elektropneumatischen Druckstellers erzeugt, welcher daraufhin einen in dem wenigstens einen Betriebsbremszylinder anstehenden Ist-Bremsdruck auf den Soll-Lösebremsdruck einregelt, gemäß dem Oberbegriff von Anspruch 5.

Ein solches Verfahren bzw. eine solche elektropneumatische Betriebsbremseinrichtung eines Fahrzeugs ist aus DE 10 2013 007 881 A1 bekannt. Bei einer solchen elektropneumatischen Betriebsbremseinrichtung verursachen die Drucksteller z.B. in Form von elektropneumatischen Druckregelmoduln beim Bremslösen und damit beim Ablassen von Druckluft störende Geräusche. Dadurch kann sogar die Homologation von mit einer solchen Betriebsbremseinrichtung ausgerüsteten Fahrzeugen in Frage gestellt werden.

Der vorliegenden Erfindung liegt daher die Aufgabe zugrunde, eine elektropneumatische Betriebsbremseinrichtung bzw. ein Verfahren zu deren Betrieb derart weiter zu entwickeln, dass mit geringem Aufwand weniger Geräusche verursacht werden.

Diese Aufgabe wird erfindungsgemäß durch die Merkmale von Anspruch 1 und von Anspruch 5 gelöst. Vorteilhafte Weiterbildungen der Erfindung sind Gegenstand der beigefügten Unteransprüche.

### Offenbarung der Erfindung

Die Erfindung beruht auf der Erkenntnis, dass stöhrende Geräusch auf einen hohen Druckgradienten beim Bremslösen, d.h. beim Ablassen von unter (hohem) Bremsdruck stehender Druckluft aus den Bremszylindern ins Freie zurückzuführen sind.

Vorteilhaftweise ist mit einer aktiven Begrenzung des Druckgradienten beim oder während des Bremslösens abhängig von Betriebsbedingungen des Fahrzeugs eine geringere Geräuschentwicklung zu erzielen, weil bei einer langsamen Bremsdrucksenkung weniger Geräusche entstehen als bei einer schnellen Bremsdrucksenkung. Wenn beispielsweise auf eine Bremslöseanforderung hin der Bremsdruck in dem wenigstens einen Bremszylinder von einem Ausgangsdruck von 4 bar auf einen Ziellösedruck von 1 bar gesenkt werden soll, so ergibt sich eine umso geringere Geräuschentwicklung desto langsamer diese Drucksenkung erfolgt.

Unter einer aktiven Begrenzung des Druckgradienten soll verstanden werden, dass der Druckgradient durch aktive Eingriffe in die Steuerung der Betriebsbremseinrichtung eingestellt wird, wobei der Druckgradient gegenüber einem Druckgradienten begrenzt d.h. reduziert wird, der sich ohne einen solchen aktiven Eingriff einstellen würde. Mit anderen Worten wird der während des Lösens der Betriebsbremse herrschende Druckgradient aktiv auf einen oberen Grenzwert begrenzt, der kleiner ist als der Druckgradient, der sich mit der Betriebsbremseinrichtung einstellt, wenn diese den Soll-Lösebremsdruck ohne Begrenzung des Druckgradienten in dem wenigstens einen pneumatischen Betriebsbremszylinder herstellt.

Der Grad der Begrenzung wird abhängig von Betriebsbedingungen des Fahrzeugs eingestellt und liegt in einem Bereich zwischen keiner Begrenzung und einer maximalen Begrenzung. Keine Begrenzung bedeutet daher, dass kein aktiver Eingriff erfolgt und eine maximale Begrenzung, dass ein maximaler Eingriff erfolgt. Dazwischen sind sämtliche Grade und Abstufungen der Begrenzung des Druckgradienten beim Bremslösen möglich.

Der Druckgradient beim Bremslösen stellt das Verhältnis der Druckdifferenz zwischen dem (höheren) Ausgangsbremsdruck zu dem (niedrigeren) Bremslösedruck bezogen auf die Zeit oder Zeiteinheit dar, wobei der (höhere) Ausgangsbremsdruck der im Moment des Beginns des Bremslösens herrschende Bremsdruck und der (niedrigere) Bremslösedruck beispielsweise der Atmosphärendruck ist, auf den der Bremsdruck als Ziel- oder Solldruck entspannt werden soll. Alternativ könnte der zu erzielende Bremslösedruck auch größer als der Atmosphärendruck sein, wenn beispielsweise lediglich eine Anforderung zum Teillösen der Betriebsbremse vorliegt. In der Regel wird der Druckgradient in bar (1 x 10⁵ Pa) je Sekunde angegeben, z.B. 25 bar/s.

Gemäß dem erfindungsgemäßen Verfahren ist daher vorgesehen, dass der wenigstens eine elektropneumatische Druckstellers derart gesteuert wird, dass der während des Lösens der Betriebsbremse herrschende Druckgradient aktiv begrenzt wird, wobei der Grad der Begrenzung abhängig von Betriebsbedingungen des Fahrzeugs eingestellt wird und in einem Bereich zwischen keiner Begrenzung und einer maximalen Begrenzung liegt.

Bei der erfindungsgemäßen elektropneumatischen Betriebsbremseinrichtung ist vorgesehen, dass der wenigstens eine elektropneumatische Drucksteller durch das zentrale elektronische Steuergerät und/oder das lokale elektronische Steuergerät derart angesteuert ist, dass der während des Lösens der Betriebsbremse herrschende Druckgradient aktiv begrenzt wird, wobei der Grad der Begrenzung abhängig von Betriebsbedingungen des Fahrzeugs eingestellt wird und in einem Bereich zwischen keiner Begrenzung und einer maximalen Begrenzung liegt.

Mit anderen Worten erfolgt die aktive Begrenzung des Druckgradienten beim Bremslösen mittels einer entsprechend geänderten Ansteuerung des wenigstens einen elektro-pneumatischen Druckstellers durch das zentrale Steuergerät und/oder durch das lokale Steuergerät.

Den Maßstab für die aktive Begrenzung des Druckgradienten während des Bremslösens bildet der Druckgradient, der sich mit der Betriebsbremseinrichtung einstellt, wenn diese den Soll-Lösebremsdruck ohne aktive Begrenzung des Druckgradienten in dem wenigstens einen pneumatischen Betriebsbremszylinder herstellt. Dieser Druckgradient stellt daher den maximalen Druckgradient dar, der mit der bezüglich ihres Aufbaus und ihrer Ansteuerung unveränderten Betriebsbremseinrichtung üblicherweise erzielbar ist. Dieser maximale Druckgradient stellt sich daher tatsächlich ein, wenn die Betriebsbremseinrichtung ohne aktive Druckgradientenbegrenzung den Soll-Lösebremsdruck auf eine Bremslöseanforderung hin einstellt. Es handelt sich dabei daher nicht lediglich um einen theoretischen Wert. Denn eine Betriebsbremseinrichtung ist üblicherweise so ausgelegt, dass sie einen durch eine Bremslöseanforderung vorgegebenen Ziel- oder Soll-Lösebremsdruck möglichst schnell einstellt oder einregelt. Durch die erfindungsgemäße Begrenzung des Druckgradienten beim Bremslösen wird der Soll-Lösebremsdruck hingegen langsamer eingestellt oder eingeregelt.

Im Hinblick auf die Vorgabe des zu erzielenden Soll-Lösebremsdrucks ist es unerheblich, ob diese Vorgabe bzw. die Bremslöseanforderung durch den Fahrer, d.h. durch eine entsprechende Betätigung (Loslassen) eines Fußbremspedals oder automatisch erfolgt, beispielsweise durch ein Fahrerassistenzsystem oder durch ein Fahrdynamikregelsystem. Vielmehr ist eine Vorgabe des zu erzielenden Soll-Lösebremsdrucks durch den Fahrer und/oder durch ein solches System möglich. Bei dem elektrischen Betriebsbremswertgeber kann es sich daher um ein vom Fahrer betätigbares Fußbremsmodul handeln, wie es in EBS-Systemen zum Einsatz kommt und/oder um eine elektronische Steuereinheit eines Fahrerassistenzsystems oder Fahrdynamikregelsystems, das die Bremslöseanforderung bzw. den beim Bremslösen zu erzielenden Soll-Lösebremsdruck durch ein in das zentrale Steuergerät eingesteuertes elektrisches Bremslösesignal vorgibt.

Durch die in den Unteransprüchen aufgeführten Maßnahmen sind vorteilhafte Weiterbildungen und Verbesserungen der in Anspruch 1 angegebenen Erfindung möglich.

Besonders bevorzugt beinhalten die Betriebsbedingungen des Fahrzeugs wenigstens Folgendes: Einen aktivierten oder deaktivierten Zustand einer Antriebsschlupfregelung und/oder einer Bremsschlupfregelung und/oder einer ESP-Regelung und/oder ein Anfahren des Fahrzeugs und/oder einen Stillstand des Fahrzeugs und/oder eine Geschwindigkeit des Fahrzeugs. Diese Aufzählung ist nicht abschließend zu verstehen. Unter Betriebsbedingungen sind vielmehr sämtliche Bedingungen zu verstehen, die im Betrieb des Fahrzeugs auftreten, insbesondere im Stillstand, beim Anfahren aus dem Stillstand, während der Fahrt und beim Abbremsen von der Fahrt in den Stillstand. Der Grad der Begrenzung des Druckgradienten beim Bremslösen stellt daher keinen festen Wert dar, sondern einen entsprechend der (gerade) vorliegenden Betriebsbedingungen veränderlichen oder variablen Wert.

Dabei ist bevorzugt eine diese Betriebsbedingungen erfassende Sensoreinrichtung mit wenigstens einem Sensor vorgesehen, welche die Betriebsbedingungen repräsentierende Sensorsignale in das zentrale elektronische Steuergerät und/oder das lokale elektronische Steuergerät einsteuert. Die Sensoreinrichtung kann dabei ursprünglich auch für eine von der Betriebsbremseinrichtung abweichende Einrichtung vorgesehen sein wie z.B. für eine Steuerung einer Antriebsmaschine oder ein Getriebe des Fahrzeugs. Weil jedoch die Betriebsbremseinrichtung ebenfalls die Signale dieser Sensoreinrichtung für das erfindungsgemäße Verfahren nutzt oder verwertet, wird eine solche Sensoreinrichtung daher (auch) zur Betriebsbremseinrichtung gehörig betrachtet.

Insbesondere findet keine Begrenzung des während des Lösens der Betriebsbremse herrschenden Druckgradienten statt bzw. es wird der wenigstens eine elektropneumatische Drucksteller durch das zentrale elektronische Steuergerät und/oder das lokale elektronische Steuergerät entsprechend angesteuert, wenn die Antriebsschlupfregelung (ASR) und/oder die Bremsschlupfregelung (ABS) und/oder die ESP-Regelung aktiviert ist oder wird und/oder wenn ein Anfahren des Fahrzeugs angefordert werden. Der Grund dafür liegt darin, dass für eine hohe Regelgüte der genannten Regelungen eine möglichst schnelle Reaktion der Betriebsbremseinrichtung auf eine Bremslöseanforderung gefordert ist, welche gegenüber der aus einem langsameren Druckabbau resultierenden geringeren Geräuschentwicklung Priorität einzuräumen ist. Beispielsweise soll das Drucksenken im Rahmen eines typischen ABS-Zyklus (Drucksenken, Druckhalten, Drucksteigern) möglichst schnell ablaufen. Dasselbe gilt auch für ein angefordertes Anfahren des Fahrzeugs, bei welchem die Betriebsbremse möglichst schnell gelöst werden soll, um ein Ruckeln beim Anfahren zu vermeiden.

Hingegen findet eine maximale Begrenzung des Druckgradienten statt, wenn sich das Fahrzeug im Stillstand befindet. Denn bei bereits stehendem Fahrzeug spielt es keine Rolle, mit welchem Druckgradienten die Betriebsbremse gelöst wird. In diesem Fall wird daher der Geräuschminderung beim Bremslösen der Vorzug gegeben. Besonders bevorzugt handelt es sich bei der elektropneumatischen Betriebsbremseinrichtung um eine elektronisch bremsdruckgeregelte Betriebsbremseinrichtung oder um ein elektronisches Bremssystem (EBS), welches als Drucksteller wenigstens ein Druckregelmodul beinhaltet, in welchen das lokale elektronische Steuergerät integriert ist. Solche Druckregelmoduln beinhalten bekanntermaßen neben einem solchen lokalen Steuergerät eine Magnet-Einlass/Auslass-Ventilkombination, ein von der Einlass/Auslass-Ventilkombination pneumatisch gesteuertes Relaisventil sowie einen Drucksensor zur Messung und Rückkopplung des ausgesteuerten Bremsdrucks in das lokale Steuergerät. Das lokale Steuergerät kommuniziert mit dem zentralen Bremssteuergerät.

Gemäß einer Weiterbildung umfasst die elektropneumatische Betriebsbremseinrichtung wenigstens einen elektrischen Drucksensor, der ein dem in dem wenigstens einen Betriebsbremszylinder herrschenden Bremsdruck entsprechendes Drucksignal in das lokale Steuergerät und/oder in das zentrale Steuergerät einsteuert, welches auf der Basis dieses Signals einen Soll-Ist-Abgleich hinsichtlich des zu erzielenden Soll-Lösebremsdrucks und des zu einzustellenden Druckgradient durchführt. Im Falle eines EBS (Elektronisch geregeltes Bremssystem) wird als Drucksensor, mit dessen Hilfe der Druckgradient beim Bremslösen bestimmt wird, in vorteilhafter Weise der bereits vorhandene und in das Druckregelmodul integrierte Drucksensor herangezogen.

Die Erfindung betrifft auch ein Fahrzeug mit einer elektropneumatischen Betriebsbremseinrichtung wie oben beschrieben, insbesondere ein schweres Nutzfahrzeug.

### Zeichnung

Die Erfindung wird nachstehend anhand von Ausführungsbeispielen unter Bezugnahme auf die beigefügte Zeichnung näher beschrieben. Es zeigen:
- Fig. 1: einen schematischen Schaltplan einer elektro-pneumatischen Bremsventils mit einem bevorzugten Ausführungsbeispiel einer elektropneumatischen Betriebsbremseinrichtung gemäß der Erfindung;
- Fig.2: eine schematische Darstellung einer für eine erste Ausführungsform des erfindungsgemäßen Verfahrens ausgestaltete elektropneumatischen Betriebsbremseinrichtung auf der Basis der Betriebsbremseinrichtung von Fig.1;
- Fig. 3: eine schematische Darstellung einer für eine zweite Ausführungsform des erfindungsgemäßen Verfahrens ausgestaltete elektropneumatischen Betriebsbremseinrichtung auf der Basis der Betriebsbremseinrichtung von Fig.1;
- Fig.4: eine schematische Darstellung einer für eine dritte Ausführungsform des erfindungsgemäßen Verfahrens ausgestaltete elektropneumatischen Betriebsbremseinrichtung auf der Basis der Betriebsbremseinrichtung von Fig.1.

### Beschreibung der Ausführungsbeispiele

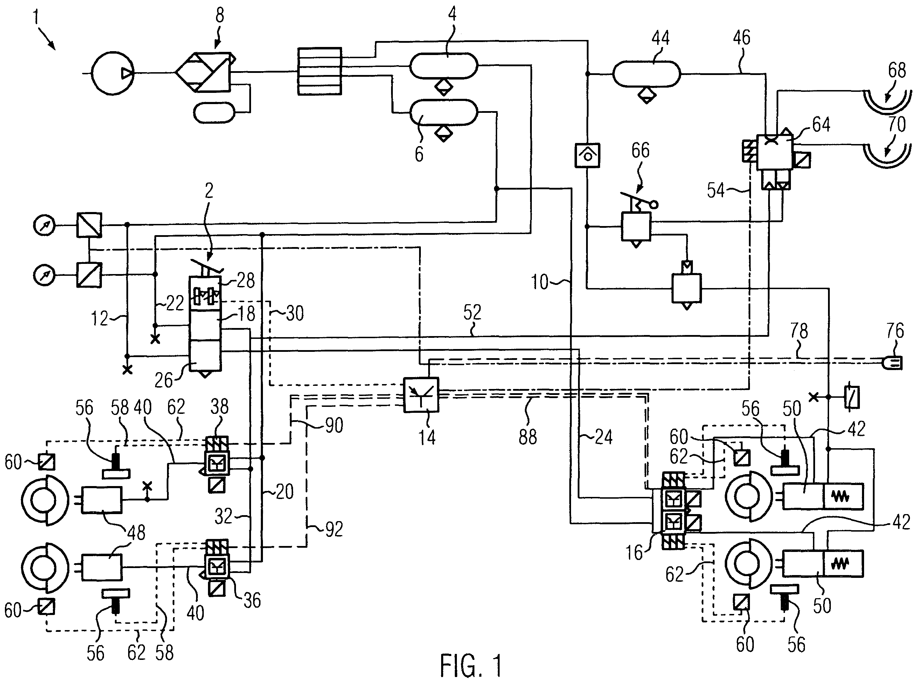

In Fig. 1 ist schematisch eine bevorzugte Ausführungsform einer elektropneumatischen Bremseinrichtung 1 eines Zugfahrzeugs einer Zugfahrzeug-Anhänger-Kombination gezeigt. Im vorliegenden Fall weist die Zugfahrzeug-Anhängerkombination beispielsweise einen hier nicht gezeigten 2-achsigen Sattelanhänger auf, es könnten jedoch auch ein Deichselanhänger oder mehrere Deichselanhänger am Zugfahrzeug angehängt sein.

Dabei wird eine Betriebsbremseinrichtung des Zugfahrzeugs beispielsweise durch eine elektro-pneumatische Reibungsbremseinrichtung in Form eines elektronisch geregelten Bremssystems (EBS; Electronic Brake System) gebildet.

Bei einem solchen elektronisch geregelten Bremssystem (EBS) sind achsweise oder radweise Druckregelmodule 16, 36, 38 vorhanden, mit integrierten Einlassventilen, Auslassventilen und Back-up-Ventilen sowie mit Drucksensoren zur Erfassung des Ist-Bremsdrucks und mit einem lokalen elektronischen Steuergerät oder Bremsdruckregler 94 zum Abgleich der Ist-Bremsdrücke mit den Soll-Bremsdrücken gemäß der jeweiligen Bremsanforderung. Der Aufbau und die Funktion solcher Druckregelmodule 16, 36, 38 ist hinlänglich bekannt und soll deshalb hier nicht weiter erläutert werden.

Das elektronisch geregelte Bremssystem (EBS) des Zugfahrzeugs beinhaltet weiterhin eine Bremsschlupfregelung (ABS), deren ABS-Steuerroutinen bevorzugt in ein zentrales Bremssteuergerät 14 integriert sind. Weiterhin sind hier beim elektronisch geregelten Bremssystem (EBS) vorzugsweise eine Antriebsschlupfregelung (ASR) sowie ein elektronisches Stabilitätsprogramm (ESP) vorhanden, wobei die diesbezüglichen Steuerroutinen ebenfalls in dem zentralen Bremssteuergerät 14 implementiert sind.

Gemäß des in Fig. 1 gezeigten Schaltschemas der elektro-pneumatischen Betriebsbremseinrichtung des Zugfahrzeugs sind ein Fußbremswertgeber oder Fußbremsmodul 2, ein Vorderachs-Vorratsdruckbehälter 4 zur Versorgung eines Vorderachs-Bremskreises oder Vorderachs-Druckkanals sowie ein Hinterachs-Vorratsdruckbehälter 6 zur Versorgung eines Hinterachs-Bremskreises oder Hinterachs-Druckkanals vorhanden. Die Luftbeschaffung, Luftaufbereitung und die Absicherung ist wie gesetzlich vorgeschrieben ausgeführt durch ein hier nicht näher beschriebenes Luftaufbereitungsmodul 8.

Der Hinterachs-Vorratsdruckbehälter 6 ist über pneumatische Versorgungsleitungen 10, 12 einerseits mit einem Vorratsanschluss eines 2-Kanal-Druckregelmoduls 16 für die Betriebsbremszylinder 50 der Hinterachse sowie mit einem Hinterachs-Kanal 26 des Fußbremswertgebers 2 verbunden. In analoger Weise ist der Vorderachs-Vorratsdruckbehälter 4 über pneumatische Versorgungsleitungen 20, 22 mit Vorratsanschlüssen von zwei jeweils einem Bremszylinder 48 eines Vorderrads zugeordneten 1-Kanal-Druckregelmodulen 36, 38 sowie mit einem Vorderachs-Kanal 18 des Fußbremsgebers 2 verbunden.

Der Fußbremswertgeber 2 umfasst daher zwei pneumatisch wirkende Kanäle 18, 26, welche abhängig von einer durch den Fuß des Fahrers auf ein Bremspedal vorgegebenen Bremsanforderung jeweils einen pneumatischen Back-up-Druck oder Steuerdruck an den Ausgängen der Kanäle 18, 26 erzeugen. Parallel hierzu sind in dem Fußbremswertgeber 2 in einem elektrischen Kanal 28 zusammengefasst ein elektrischer Vorderachskanal und ein elektrischer Hinterachskanal ausgebildet, welche abhängig von der Bremsanforderung jeweils ein elektrisches Bremsanforderungssignal in eine vorzugsweise als Datenbus 30 ausgebildete elektrische Verbindung zwischen dem elektrischen Kanal 28 des Fußbremswertgebers 2 und dem zentralen elektronischen Bremsteuergerät 14 einsteuert, welches die beiden beispielsweise wegen der Lastverteilung unterschiedlichen Bremsanforderungssignale für die Vorderachse und die Hinterachse unterscheiden kann.

Weiterhin sind der Vorderachs-Kanal 18 und der Hinterachs-Kanal 26 des Fußbremswertgebers 2 jeweils über eine pneumatische Steuerleitung 24, 32 mit zugeordneten Back-up-Anschlüssen des 2-Kanal-Druckregelmoduls 16 bzw. der 1-Kanal-Druckregelmodule 36, 38 verbunden. Weiterhin führt jeweils eine pneumatische Bremsleitung 40, 42 von Arbeitsanschlüssen des 2-Kanal-Druckregelmoduls 16 bzw. der beiden 1-Kanal- Druckregelmodule 36, 38 zu den radweisen pneumatischen Betriebsbremszylindern 48, 50 der Vorderachse bzw. der Hinterachse. Drehzahlsensoren 56 melden die aktuelle Drehzahl der Räder des Zweiachsfahrzeugs über elektrische Signalleitungen 58 an das zentrale Bremssteuergerät 14. Ebenso sind bevorzugt Verschleißsensoren 60 je Radbremse vorgesehen, welche abhängig vom aktuellen Bremsenverschleiß Signale über elektrische Signalleitungen 62 in das zentrale Bremssteuergerät 14 melden.

Weiterhin ist ein Anhängersteuermodul 64 vorgesehen, welches einerseits mit einem zugfahrzeugseitigen Anhänger-Vorratsdruckbehälter 44 über eine Versorgungsleitung 46 mit Druckluft versorgt wird und andererseits vom pneumatischen Steuerdruck beispielsweise des Vorderachs-Kanals 18 des Fußbremswertgebers 2 über eine Steuerleitung 52 pneumatisch durch Back-up-Druck gesteuert wird. Weiterhin erhält das Anhängersteuermodul 64 auch ein elektrisches Signal vom zentralen Bremssteuergerät 14 über eine elektrische Steuerleitung 54. Schließlich wird das Anhängersteuermodul 64 noch von einer hier nicht interessierenden Feststellbremseinrichtung 66 angesteuert.

Das Anhängersteuermodul 64 enthält typischerweise ein Einlassmagnetventil und ein Auslassmagnetventil sowie ein Backup-Magnetventil zur Drucksteuerung eines ebenfalls integrierten und vom Anhänger-Druckluftvorrat 44 druckluftgespeisten Relaisventils, um abhängig von einem über die elektrische Steuerleitung 54 herangeführten Steuersignal über diese Magnetventile und das Relaisventil einen Steuerdruck für einen Kupplungskopf "Bremse" 70 auszusteuern. Das Relaisventil moduliert dabei aus dem an seinem Vorratsanschluss anstehenden Vorratsdruck des Anhänger-Vorratsdruckbehälters 44 abhängig von dem durch die Magnetventile gebildeten Steuerdruck den Steuerdruck für den Kupplungskopf "Bremse" 70. Mittels eines integrierten Drucksensors wird dieser Steuerdruck für den Kupplungskopf "Bremse" 70 gemessen und an das zentrale Bremssteuergerät 14 gemeldet. Fällt diese vorrangige elektrische Steuerung aus, so schaltet das integrierte Back-up-Ventil durch und das Relaisventil wird durch den in der Steuerleitung 52 geführten pneumatischen Steuerdruck des Vorderachs-Bremskreises gesteuert. Schließlich schleift das Anhängersteuermodul 64 die vom Anhänger-Druckluftvorrat 44 stammende Druckluft unter Vorratsdruck an einen Kupplungskopf "Vorrat" 68 des Zugfahrzeugs durch. Der Aufbau und die Funktionen eines solchen elektropneumatischen Anhängersteuermoduls 64 sind hinlänglich bekannt und brauchen deshalb hier nicht weiter erläutert zu werden.

Die Bremszuspanneinrichtungen der Hinterachse sind bevorzugt als bekannte Kombizylinder, d.h. als Kombination eines aktiven Betriebsbremszylinders 50 und eines passiven Federspeicherbremszylinders ausgebildet. "Aktiv" bedeutet in diesem Zusammenhang, dass die Betriebsbremszylinder 50 bei Belüftung zuspannen und bei Entlüftung lösen und "Passiv", dass die Federspeicherbremszylinder bei Entlüftung zuspannen und bei Belüftung lösen. An den Rädern der Vorderachse sind demgegenüber nur aktive Betriebsbremszylinder 48 vorgesehen.

Das als Baueinheit ausgeführte elektro-pneumatische 2-Kanal-Druckregelmodul 16 hat zwei getrennt regelbare Druckregelkanäle, wobei für jeden Druckregelkanal auf der Basis einer von dem Hinterachs-Druckluftvorrat 6 stammenden Vorratsluft abhängig von dem Bremsanforderungssignal des Fußbremswertgebers 2 ein geregelter, an den jeweiligen Arbeitsdruckanschlüssen anstehender Arbeitsdruck für die Bremszylinder 50 der Hinterachse erzeugt und mittels der integrierten Drucksensoren gemessen wird, um den gemessenen Ist-Bremsdruck an den Soll-Bremsdruck gemäß Bremsanforderung an- zupassen bzw. einzuregeln. In analoger Weise wird in jedem 1-Kanal-Druckregelmodul 36, 38 der Vorderachse individuell für die beiden Bremszylinder 48 der Räder der Vorderachse der Bremsdruck geregelt.

Zur Ausbildung von pneumatisch kreisgetrennten Druckregelkanälen (beispielsweise hier: Vorderachs-Druckregelkanal bzw. Hinterachs-Druckregelkanal) ist jedem Druckregelkanal folglich ein eigener Druckluftvorrat 4, 6 zugeordnet, wobei die pneumatischen Strömungswege eines jeden Druckregelkanals ausgehend von dem zugeordneten Druckluftvorrat 4, 6 über die zugeordneten Druckregelmodule 16, 36, 38 bis zu den zugeordneten Bremszuspanneinrichtungen 48, 50 von dem pneumatischen Strömungsweg eines jeweils anderen Druckregelkanals pneumatisch getrennt ausgebildet sind.

Zur Ausbildung einer elektro-pneumatischen Betriebsbremseinrichtung mit vorrangig elektrisch betätigten Druckregelkanälen (Vorderachs-Druckregelkanal bzw. Hinterachs-Druckregelkanal) und einer nachrangigen pneumatischen Rückfallebene bei einem Ausfall der Elektrik ist jedem Druckregelmodul 16, 36, 38 besonders bevorzugt ein eigener Back-up-Kreis zugeordnet, mit eigenem Back-up-Ventil für die Einsteuerung eines von dem Vorratsdruck des dem jeweiligen Druckregelkreis der Hinterachse bzw. der Vorderachse zugeordneten Druckluftvorrat 4, 6 abgeleiteten und vom Fußbremswertgeber 2 gebildeten pneumatischen Back-up- oder Steuerdrucks, aus welchem bei einem Ausfall von elektrischen Komponenten der jeweilige Bremsdruck an den Arbeitsdruckanschlüssen der Druckregelmodule 16, 36, 38 gebildet wird.

Die Bremseinrichtung 1 des Zugfahrzeugs und die Bremseinrichtung des Anhängers sind, wie bei solchen Bremsanlagen üblich, mittels jeweils eines Kupplungskopfes "Vorrat" 68 und jeweils mittels eines Kupplungskopfes "Bremse" 70 miteinander gekoppelt. Da das Anhängersteuermodul 64 kein eigenes elektronisches Steuergerät besitzt, müssen die elektrischen Bremssteuersignale vom zentralen Bremssteuergerät 14 über einen CAN-BUS "Anhänger" 78 und eine elektronische Anhängerschnittstelle 76 an den Anhänger übertragen werden, falls dieser eine elektro-pneumatische Bremsanlage aufweist. Das Anhängersteuermodul 64 wie auch das 2-Kanal- Druckregelmodul 16 und die beiden 1-Kanal-Druckregelmodule 36, 38 werden jeweils über eine elektrische Steuerleitung 54, 88, 90, 92 von dem zentralen Bremssteuergerät 14 angesteuert.

Anstatt einer rein pneumatischen Bremsanlage könnte der Anhänger auch mit einer elektro-pneumatischen Bremsanlage mit ABS-Funktion versehen sein. In diesem Fall ist die elektrische Schnittsstelle 76 des Zugfahrzeugs über eine Datenverbindung, beispielsweise ein Kabel mit einer hierzu komplementären Schnittstelle im Anhänger verbunden, die zu einem ABS-Steuergerät im Anhänger führt, um Daten austauschen zu können. Damit wird eine Bremsschlupfregelung für alle Achsen des Anhängers durchgeführt. Wenn aber, wie bevorzugt die Radbremsschlupfermittlung durch Raddrehzahlsensoren an beispielsweise nur einer Achse des 2-achsigen Sattelaufliegers durchgeführt wird, dann wird der Bremsschlupf an der anderen, nicht mit Raddrehzahlsensoren versehenen Achse nach der einen Achse mit Raddrehzahlsensoren geregelt. Daraus können dann die eingangs beschriebenen Nachteile hinsichtlich des Bremsblockierens der anderen Achse ohne Raddrehzahlsensierung und die damit verbundene mangelnde Seitenführung der Räder dieser an- deren Achse entstehen.

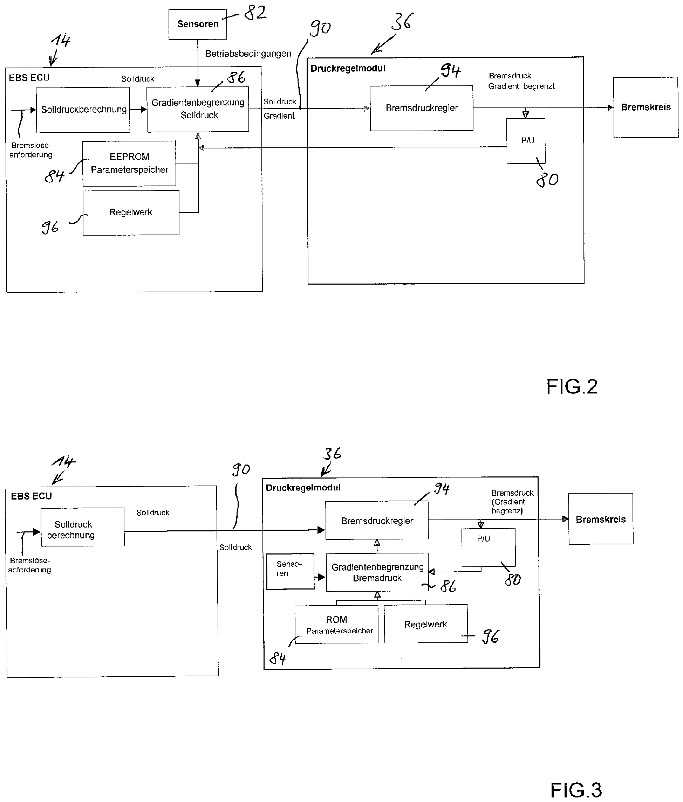

Vor diesem Hintergrund ist die Funktionsweise der Bremseinrichtung 1 wie folgt:
Bei einem normalen Bremsvorgang betätigt der Fahrer das Bremspedal und damit den Fußbremswertgeber 2, wodurch in dem elektrischen Kanal 28 ein elektrisches Bremsanforderungssignal analog zur gewünschten Soll-Verzögerung bzw. zum Fahrerbremswunsch erzeugt und in das zentrale Bremssteuergerät 14 eingesteuert wird, welches daraufhin über die die elektrischen Steuerleitungen 54, 88, 90, 92 entsprechend dem Bremsanforderungssignal und eventuell abhängig von weiteren Parametern wie der jeweiligen Ladungsverteilung jeweils einen Soll-Bremsdruck in das Anhängersteuermodul 64, das 2-Kanal-Druckregelmodul 16 der Hinterachse sowie die beiden 1-Kanal-Druckregelmodule 36, 38 der Vorderachse einsteuert. Dieser Signalfluss ist in den Figuren 2 bis 4 exemplarisch an einem Druckregelmodul 36 der beiden Druckregelmodule 36, 38 der Vorderachse dargestellt.

Dabei werden in den Druckregelmoduln 16, 36, 38 sowie auch im Anhängersteuermodul 64 die jeweils integrierten Einlassmagnetventile, Auslassmagnetventile und evtl. Back-up-Magnetventile, die meist als 2/2-Wege-Magnetventile ausgebildet sind, entsprechend der Bremsanforderung geschaltet, damit sie die ebenfalls integrierten Relaisventile pneumatisch steuern, um einen gemäß der Bremsanforderung entsprechenden Soll-Bremsdrücke in die betreffenden Bremszylinder 48, 50 des Zugfahrzeugs bzw. in der Bremszylinder des Anhängers einzusteuern. Die in den Druckregelmoduln 16, 36 und 38 und in dem Anhängersteuermodul 64 integrierten Drucksensoren melden dann den Ist-Bremsdruck bzw. Ist-Steuerdruck an die lokalen elektronischen Steuergeräte 94 in den Druckregelmoduln 16, 36 und 38 bzw. im Anhängersteuermodul 64, welche daraufhin durch Ansteuerung der modulseitigen Magnetventile den jeweiligen Soll-Bremsdruck einregeln.

Wenn das Bremsanforderungssignal für das zentrale Bremssteuergerät 14 anstatt vom Fußbremswertgeber 2 von einem Fahrassistenzsystem wie z.B. ESP (Electronic Stability Program) oder ACC (Adaptive Cruise Control) erzeugt wird, so laufen die gleichen Funktionen wie oben beschrieben ab.

Falls der Bremsschlupf eines Rades oder mehrerer Räder des Zugfahrzeugs eine vorgegebene Bremsschlupfgrenze von beispielsweise 12% bis 14% überschreitet, was über die Raddrehzahlsensoren 56 festgestellt werden kann, so spricht die Bremsschlupfregelung bzw. das ABS des Zugfahrzeugs an. Dabei wird über eine entsprechende Ansteuerung der Magnetventile in dem dem jeweils bremsschlupfenden Rad zugeordneten Druckregelmodul 36, 38 bzw. in dem den jeweils bremsschlupfenden Rädern zugeordneten Druckregelmodul 16 durch die in dem zentralen Bremssteuergerät 14 implementierten ABS-Routinen die Bremsdrücke für das Zugfahrzeug so eingestellt, dass die Bremsschlupf-Regeldifferenz ausgeregelt wird.

In dem zentralen Bremssteuergerät 14 sind Kompatibilitätsbänder gespeichert, welche das Verhältnis zwischen der jeweils gewünschten Abbremsung der Zugfahrzeug-Anhängerkombination und der daraus resultierenden Bremskraft des Anhängers bzw. und dem Druck am Kupplungskopf "Bremse" des Zugfahrzeugs festlegen. Der sich aus dem Kompatibilitätsband ergebende Bremsdruck für die Bremsanlage des Anhängers kann dann optional noch durch eine Koppelkraftregelung modifiziert werden. Dann wird das Anhängersteuermodul 64 von dem zentralen Bremssteuergerät 14 angesteuert, um den pneumatischen Steuerdruck im Kupplungskopf "Bremse" für den Anhänger entsprechend dieser Vorgaben einzustellen. Somit würde der Bremsdruck im Anhänger abhängig von dem durch die Bremsschlupfregelung beeinflussten Bremsdruck im Zugfahrzeug gebildet.

Zusammenfassend bildet daher der in ihrer absoluten Größe vom Bremsanforderungssignal oder von der vorgegebenen Soll-Verzögerung der Zugfahrzeug-Anhängerkombination, von der ansprechenden Bremsschlupfregelung (Reibwert der Fahrbahnoberfläche) des Zugfahrzeugs, vom Kompatibilitätsband Zugfahrzeug-Anhänger und eventuell noch von einer vorhandenen Koppelkraftregelung abhängige Bremsdruck der Bremsanlage des Anhängers dann einen Referenzbremsdruck für die Bremsanlage des Anhängers. Anstatt eines Referenzbremsdrucks kann auch eine Referenzbremskraft des Anhängers oder eine Referenzabbremsung des Anhängers herangezogen werden, welche sich auf die gleichen oben beschriebenen Umstände bezieht.

In den Figuren 2 bis 4 ist nun der Signalfluss dargestellt, wie er die elektropneumatische Betriebsbremseinrichtung beim Lösen der Betriebsbremse steuert. Generell sind störende Geräusche beim Bremslösen auf einen hohen Druckgradienten beim Ablassen von unter (hohem) Bremsdruck stehender Druckluft aus den Bremszylindern ins Freie zurückzuführen. Im vorliegenden Fall einer EBS werden die Bremszylinder 48, 50 beim Bremslösen über die in den Druckregelmoduln 16, 36, 38 integrierten Auslassventile (Magnetventile) entlüftet. Es ist daher vorgesehen, dass der während des Lösens der Betriebsbremse herrschende Druckgradient auf einen oberen Grenzwert begrenzt wird, der kleiner ist als der Druckgradient, der sich mit der Betriebsbremseinrichtung einstellt, wenn diese den Soll-Bremsdruck ohne Begrenzung des Druckgradienten in den Betriebsbremszylindern 48, 50 herstellt.

Dabei werden die Druckregelmoduln 16, 36 und 38 und hier beispielsweise auch das Anhängersteuermodul 64 durch das zentrale elektronische Steuergerät 14 und/oder durch das in das jeweilige Druckregelmodul 16, 36 und 38 bzw. in das Anhängersteuernmodul 64 integrierte lokale elektronische Steuergerät 94 derart angesteuert, dass der während des Lösens der Betriebsbremse herrschende Druckgradient auf einen oberen Grenzwert begrenzt wird. Das Druckregelmodul 36 ist in den Figuren 2 bis 4 stellvertretend für die weiteren Druckregelmodule 16, 38 bzw. für das Anhängersteuermodul 64 dargestellt. Das Verfahren bzw. die Verschaltung ist bei den anderen Druckregelmoduln 16, 38 bzw. bei dem Anhängersteuermodul 64 jeweils analog.

Mit anderen Worten erfolgt die Begrenzung des Druckgradienten beim Bremslösen mittels einer entsprechend geänderten Ansteuerung der Druckregelmoduln 16, 36 und 38 bzw. des Anhängersteuernmoduls 64 durch das zentrale Steuergerät 14 und/oder durch die dort jeweils integrierten lokalen Steuergeräte 94. Im Einzelnen wird dann beispielsweise das jeweils in den Druckregelmoduln 16, 36 und 38 bzw. im Anhängersteuernmodul 64 integrierte Auslassventil derart angesteuert, so dass sich gegenüber dem üblichen maximal erzielbaren Druckgradienten ein kleinerer Druckgradient ergibt. Da das Auslassventil (2/2-Wege-Magnetventil) zum Bremslösen üblicherweise gepulst zwischen Öffnungs- und Schließstellung angesteuert wird, kann ein reduzierter Druckgradient beim Bremslösen beispielsweise dadurch erzielt werden, dass die Pulsfrequenz verändert wird. Das Auslassventil steuert dann das Relaisventil des Druckregelmoduls 36 entsprechend an.

Besonders ist dieser obere Grenzwert für den Druckgradient beim Bremslösen kein fester Wert sondern wird abhängig von Betriebsbedingungen des Fahrzeugs variabel festgelegt. Besonders bevorzugt wird als Betriebsbedingungen des Fahrzeugs, von welchen abhängig der obere Grenzwert angepasst wird, wenigstens folgendes herangezogen: Ein aktivierter oder deaktivierter Zustand einer Antriebsschlupfregelung und/oder einer Bremsschlupfregelung und/oder einer ESP-Regelung und/oder ein Anfahren des Fahrzeugs und/oder eine Vollbremsung während der Fahrt. Mit anderen Worten wird der obere Grenzwert für den Druckgradienten beim Bremslösen abhängig davon festgelegt, ob eine Antriebsschlupfregelung und/oder eine Bremsschlupfregelung und/oder eine ESP-Regelung aktiviert ist/wird oder nicht und/oder ob ein Anfahren des Fahrzeugs angefordert wird.

Dabei ist bevorzugt eine diese Betriebsbedingungen erfassende Sensoreinrichtung 82 mit wenigstens einem Sensor vorgesehen, welche die Betriebsbedingungen repräsentierende Sensorsignale in das zentrale elektronische Steuergerät 14 und/oder ein wenigstens ein lokales elektronisches Steuergerät 94 einsteuert.

Insbesondere findet keine Begrenzung des während des Lösens der Betriebsbremse herrschenden Druckgradienten auf den oberen Grenzwert statt bzw. es werden die Druckregelmoduln 16, 36, 38 bzw. das Anhängersteuermodul 64 durch das zentrale elektronische Steuergerät 14 und/oder durch das betreffende lokale elektronische Steuergerät 94 entsprechend angesteuert, wenn die Antriebsschlupfregelung (ASR) und/oder die Bremsschlupfregelung (ABS) und/oder die ESP-Regelung aktiviert ist oder wird und/oder wenn ein Anfahren des Fahrzeugs angefordert werden. Der Grund dafür liegt darin, dass für eine hohe Regelgüte der genannten Regelungen eine möglichst schnelle Reaktion der Betriebsbremseinrichtung auf eine Bremslöseanforderung gefordert ist, welche gegenüber der aus einem langsameren Druckabbau resultierenden geringeren Geräuschentwicklung Priorität einzuräumen ist.

In den Druckregelmoduln 16, 36, 38 bzw. im Anhängersteuermodul 64 sind ohnehin Drucksensoren 80 zur Messung des Ist-Bremsdrucks vorhanden, die dann ein dem in dem zugeordneten Betriebsbremszylinder bzw. Anschluss herrschenden Ist-Bremsdruck entsprechendes Drucksignal in das lokale Steuergerät 94 und/oder in das zentrale Steuergerät 14 einsteuern, um bei einer nicht tolerierbaren Soll-Ist-Abweichung eine Korrektur an dem Signal für den Soll-Bremsdruck insbesondere auch im Hinblick auf den oberen Grenzwert für den Druckgradienten vornehmen zu können.

Bei der Ausführungsform von Fig.2 wird die vom Fahrer über ein Loslassen eines Fußbremspedals des Fußbremswertgebers vorgegebene Bremslöseanforderung (Fahrerwunsch) über den Datenbus 30 in das zentrale Steuergerät 14 eingesteuert und dort daraus der Soll-Bremsdruck für jeden Bremskreis berechnet (Solldruckberechnung), im Beispiel stellvertretend für nur einen Vorderachs-Bremskreis.

Die Sensoreinrichtung 82 steuert weiterhin Betriebsbedingungen des Fahrzeugs repräsentierende Signale wie z.B. inaktive Regelungen wie ABS in das zentrale Steuergerät 14 ein. In einem EEPROM Speicher (Parameterspeicher) sind kennfeldartig Werte für begrenzte Druckgradienten abhängig von Betriebsbedingungen des Fahrzeugs hinterlegt. Da im vorliegenden Fall anhand der Signale der Sensoreinrichtung 82 das zentrale Steuergerät 14 anhand eines implementierten Regelwerks 96 feststellt, dass beispielsweise keine Regelung des Fahrzeugs wie ABS, ASR oder ESP aktiv ist und auch kein Anfahrvorgang des Fahrzeugs stattfindet, holt es sich aus dem EEPROM Speicher 84 bzw. den dort implementierten Kennfeldern einen den beim Bremslösen vorliegenden Betriebsbedingungen (keine Regelung aktiv, kein Anfahrvorgang) entsprechenden oberen Grenzwert für den Druckgradienten und liest ihn in einen Gradientenbegrenzer 86 ein, in welchem das Signal für den Soll-Bremsdruck durch die Information über den oberen Grenzwert für den Druckgradienten beim Bremslösen ergänzt wird. Dieser obere Grenzwert für den Druckgradienten ist dann stets kleiner als ein eigentlich mit der Betriebsbremseinrichtung erzielbarer Druckgradient beim Bremslösen.

Wenn nun das zentrale Steuergerät 14 ein den durch die Information für den oberen Grenzwert für den Druckgradienten ergänzten Soll-Bremsdruck (Solldruck) repräsentierendes Signal über die Steuerleitung 90 in das lokale elektronische Steuergerät 94 des Druckregelmoduls 36 einsteuert, so setzt dieses das Signal in einen entsprechenden Bremsdruck um und steuert ihn in den zugeordneten Vorderachs-Bremskreis aus. Da in dem Signal für den Bremsdruck bereits die Information für die Beschränkung des Druckgradienten auf den oberen Grenzwert enthalten ist, steuert das lokale Steuergerät 94 insbesondere das Auslassventil des Druckregelmoduls 36 an, damit für den Bremslösevorgang der obere Grenzwert für den Druckgradienten nicht überschritten wird. Der vom Druckregelmodul 36 ausgesteuerte Ist-Bremsdruck wird dabei kontinuierlich vom integrierten Drucksensor 80 gemessen und an das zentrale Steuergerät 14 beispielsweise ebenfalls über die insbesondere bidirektionale Steuerleitung 90 rückgemeldet, um gegebenenfalls, d.h. bei einer nicht tolerierbaren Soll-Ist-Abweichung eine Korrektur an dem Signal für den Soll-Bremsdruck insbesondere auch im Hinblick auf den oberen Grenzwert für den Druckgradienten vornehmen zu können. Bei dem Ausführungsbeispiel von Fig.2 findet die Begrenzung des Druckgradienten auf einen oberen Grenzwert beim Bremslösen daher ausschließlich durch das zentrale Steuergerät 14 statt.

Im Gegensatz dazu findet bei der Ausführungsform von Fig.3 die Begrenzung des Druckgradienten auf einen oberen Grenzwert beim Bremslösen ausschließlich durch das lokale Steuergerät 94 des Druckregelmoduls 36 statt. Mit anderen Worten liefert das zentrale Steuergerät 14 lediglich den "Rohwert" für den Soll-Bremsdruck abhängig von der Bremslöseanforderung (Fahrerwunsch) an das lokale Steuergerät 94.

Dieser "Rohwert" wird dann durch die Information über den oberen Grenzwert für den Druckgradienten beim Bremslösen ergänzt.

Eine externe Sensoreinrichtung 82 steuert zwar Betriebsbedingungen des Fahrzeugs repräsentierende Signale wie z.B. inaktive Regelungen wie ABS in das lokale Steuergerät 94 ein. Das Druckregelmodul 36 erhält dann über die Sensoreinrichtung 82 Informationen über Betriebsbedingungen des Fahrzeugs. Jedoch sind diese Informationen wegen der beschränkten Zugriffsmöglichkeiten eines Druckregelmoduls 36 auf Betriebsbedingungen des Fahrzeugs wie die Aktivität von Regelsystemen wie ESP limitiert. Denn die Sensoreinrichtung 82, welche hier eher symbolisch dargestellt ist, liefert Daten über oder von weiteren Steuergeräten des Fahrzeugs wie z.B. Motorsteuergerät, Getriebesteuergerät usw., welche an einen Fahrzeugdatenbus angebundne sind. Da aber das Druckregelmodul 36 nicht direkt mit dem Fahrzeugdatenbus kommunizieren kann besitzt die Ausführungsform von Fig.3 gegenüber der Ausführungsform von Fig.2 daher den Nachteil, dass ein Druckregelmodul 36 bzw. dessen lokales Steuergerät 94 üblicherweise nicht an alle Informationen über im Hinblick auf eine Begrenzung des Druckgradienten relevanten Betriebsbedingungen gelangen kann und deshalb eine situative Anpassung des oberen Grenzwerts für den Druckgradienten beim Bremslösen nur eingeschränkt möglich ist.

Das lokale Steuergerät 94 stellt dann anhand eines Regelwerks 96 fest, dass beispielsweise keine Regelung des Fahrzeugs wie ABS, ASR oder ESP aktiv ist und auch kein Anfahrvorgang des Fahrzeugs stattfindet, und holt sich aus dem ROM Speicher 84 bzw. den dort implementierten Kennfeldern einen den beim Bremslösen vorliegenden Betriebsbedingungen (keine Regelung aktiv, kein Anfahrvorgang) entsprechenden oberen Grenzwert für den Druckgradienten und liest ihn in einen Gradientenbegrenzer 86 ein, in welchem das vom zentralen Steuergerät 14 erhaltene "Rohsignal" für den Soll-Bremsdruck durch die Information über den oberen Grenzwert für den Druckgradienten beim Bremslösen ergänzt wird.

Da in dem Signal für den Soll-Bremsdruck bereits die Information für die Beschränkung des Druckgradienten auf den oberen Grenzwert enthalten ist, steuert das lokale Steuergerät 94 insbesondere das Auslassventil des Druckregelmoduls 36 an, damit für den Bremslösevorgang der obere Grenzwert für den Druckgradienten nicht überschritten wird. Der vom Druckregelmodul 36 ausgesteuerte Ist-Bremsdruck wird dabei kontinuierlich vom integrierten Drucksensor 80 gemessen und an das lokale Steuergerät 94 rückgemeldet, um gegebenenfalls, d.h. bei einer nicht tolerierbaren Soll-Ist-Abweichung eine Korrektur an dem Signal für den Soll-Bremsdruck insbesondere auch im Hinblick auf den oberen Grenzwert für den Druckgradienten vornehmen zu können. Gegenüber der Ausführungsform von Fig.2 besitzt die Ausführungsform von Fig.3 den Vorteil, dass das Druckregelmodul 36 bzw. das lokale Steuergerät 94 zusätzlich zu einer Begrenzung des Druckgradienten beim Bremslösen noch weitere Geräusche mindernde Maßnahmen durchführen kann, wie beispielsweise eine Veränderung der Pulsfrequenz des Auslassventils beim Bremslösen.

Im Gegensatz dazu findet bei der Ausführungsform von Fig.3 die Begrenzung des Druckgradienten auf einen oberen Grenzwert beim Bremslösen sowohl durch das zentrale Steuergerät 14 als auch durch das lokale Steuergerät 94 des Druckregelmoduls 36 statt. Das zentrale Steuergerät 14 liefert dabei zum einen den "Rohwert" für den Soll-Bremsdruck abhängig von der Bremslöseanforderung (Fahrerwunsch) über die Steuerleitung 90 an das lokale Steuergerät 94 des Druckregelmoduls 36.

Weiterhin steuert eine Sensoreinrichtung 82 Betriebsbedingungen des Fahrzeugs repräsentierende Signale wie z.B. inaktive Regelungen wie ABS in das zentrale Steuergerät 14 ein. Dort sind wie bei der Ausführungsform von Fig.1 ein EEPROM Speicher (Parameterspeicher) 84, ein Regelwerk 96 sowie ein Gradientenbegrenzer 86 vorhanden. Aus den von der Sensoreinrichtung erhaltenen Betriebsbedingungen des Fahrzeugs und dem vom Fußbremswertgeber 2 erhaltenen Signal für die Bremslöseanforderung (Fahrerwunsch) wird dann ein Wert (Gradientenbegrenzung) gebildet, welcher ein Maß für den oberen Grenzwert des Druckgradienten darstellt. Dieser Wert bzw. dieses Maß (Gradientenbegrenzung) wird dann beispielsweise durch die bidirektionale Steuerleitung 90 in das lokale Steuergerät 94 eingesteuert, welches ebenfalls über einen ROM Parameterspeicher 84', ein Regelwerk 96', und einen Gradientenbegrenzer 86' verfügt. Dort wird dann der "Rohwert" für den Soll-Bremsdruck

Durch das Maß für den oberen Grenzwert des Druckgradienten beim Bremslösen (Gradientenbegrenzung) ergänzt und die Ventileinrichtung des Druckregelmoduls 34 (Einlass-/Auslassventil-Kombination, Relaisventil) angesteuert, um einen dieser Vorgabe entsprechenden Bremsdruck an den betreffenden Bremskreis bzw. an den betreffenden Bremszylinder auszusteuern. Der vom Druckregelmodul 36 ausgesteuerte Bremsdruck wird dabei kontinuierlich vom integrierten Drucksensor 80 gemessen und an das lokale Steuergerät 94 rückgemeldet, um gegebenenfalls, d.h. bei einer nicht tolerierbaren Soll-Ist-Abweichung eine Korrektur an dem Signal für den Soll-Bremsdruck insbesondere auch im Hinblick auf den oberen Grenzwert für den Druckgradienten vornehmen zu können.

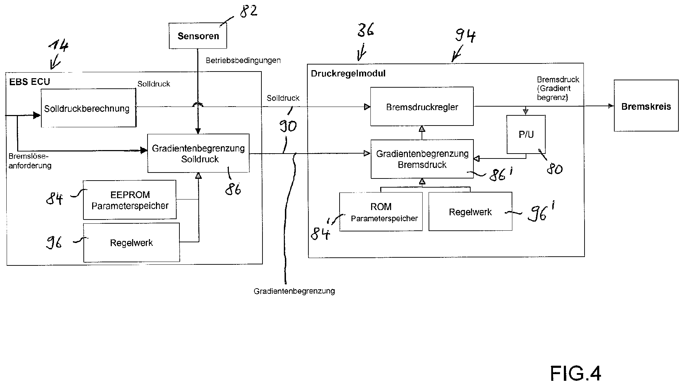

Der Vorteil dieser Ausführungsform liegt darin, dass das zentrale Steuergerät 14 besser auf die von der Sensoreinrichtung 82 zur Verfügung gestellten Betriebsbedingungen zugreifen und daher einen verlässlicheres Maß für den oberen Grenzwert des Druckgradienten beim Bremslösen liefern kann. Andererseits hat die Ausführungsform von Fig.4 den Vorteil, dass das Druckregelmodul 36 bzw. das lokale Steuergerät 94 zusätzlich zu einer Begrenzung des Druckgradienten beim Bremslösen noch weitere Geräusche mindernde Maßnahmen durchführen kann, wie beispielsweise eine Veränderung der Pulsfrequenz des Auslassventils beim Bremslösen.

### Bezugszeichenliste

- 1: Bremseinrichtung
- 2: Fußbremswertgeber
- 4: VA-Vorratsdruckbehälter
- 6: HA-Vorratsdruckbehälter
- 8: Luftaufbereitungsmodul
- 10: Versorgungsleitung
- 12: Versorgungsleitung
- 14: zentrales Bremssteuergerät
- 16: 2-Kanal-Druckregelmodul
- 18: VA-Kanal
- 20: Versorgungsleitung
- 22: Versorgungsleitung
- 24: Steuerleitung
- 26: HA-Kanal
- 28: elektrischer Kanal
- 30: Datenbus
- 32: Steuerleitung
- 36: 1-Kanal-Druckregelmodul
- 38: 1-Kanal-Druckregelmodul
- 40: Bremsleitung
- 42: Bremsleitung
- 44: zugfahrzeugseitiger Anhänger-Vorratsdruckbehälter
- 46: Versorgungsleitung
- 48: Bremszuspanneinrichtung VA
- 50: Bremszuspanneinrichtung HA
- 52: Steuerleitung
- 54: elektrische Steuerleitung
- 56: Drehzahlsensoren
- 58: elektrische Signalleitungen
- 60: Verschleißsensoren
- 62: elektrische Signalleitungen
- 64: Anhängersteuermodul
- 66: Feststellbremseinrichtung
- 68: Kupplungskopf "Vorrat"
- 70: Kupplungskopf "Bremse"
- 76: Anhängerschnittstelle
- 78: Anhänger-Datenbus
- 80: Drucksensor
- 82: Sensoreinrichtung
- 84: EEPROM Speicher
- 86: Gradientenbegrenzer
- 88: elektrische Steuerleitung
- 90: elektrische Steuerleitung
- 92: elektrische Steuerleitung
- 94: lokales elektronisches Steuergerät
- 96: Regelwerk

## Patentansprüche

1. Verfahren zum Steuern einer elektropneumatischen Betriebsbremseinrichtung eines Fahrzeugs, bei welchem ausgehend von einem wenigstens teilweise zugespannten Zustand der Betriebsbremse ein zum wenigstens teilweisen Lösen der Betriebsbremse zu erzielender Soll-Lösebremsdruck mittels wenigstens eines elektropneumatischen Druckstellers (16, 36, 38) in wenigstens einem pneumatischen Betriebsbremszylinder (48, 50) hergestellt wird, wobei das Herstellen des Soll-Lösebremsdrucks in dem wenigstens einen pneumatischen Betriebsbremszylinder (48, 50) unter einem Druckgradienten erfolgt, **dadurch gekennzeichnet, dass** der wenigstens eine elektropneumatische Drucksteller (16, 36, 38) derart gesteuert wird, dass der während des Lösens der Betriebsbremse herrschende Druckgradient aktiv begrenzt wird, wobei der Grad der Begrenzung abhängig von Betriebsbedingungen des Fahrzeugs eingestellt wird und in einem Bereich zwischen keiner Begrenzung und einer maximalen Begrenzung liegt.

2. Verfahren nach Anspruch 1, **dadurch gekennzeichnet, dass** die Betriebsbedingungen des Fahrzeugs wenigstens Folgendes beinhalten: Einen aktivierten oder deaktivierten Zustand einer Antriebsschlupfregelung und/oder einer Bremsschlupfregelung und/oder einer ESP-Regelung und/oder ein Anfahren des Fahrzeugs und/oder einen Stillstand des Fahrzeugs und/oder eine Geschwindigkeit des Fahrzeugs.

3. Verfahren nach Anspruch 2, **dadurch gekennzeichnet, dass** keine Begrenzung des Druckgradienten während des Bremslösens stattfindet, wenn die Antriebsschlupfregelung und/oder die Bremsschlupfregelung und/oder die ESP-Regelung aktiviert ist oder wird und/oder wenn ein Anfahren des Fahrzeugs angefordert wird.

4. Verfahren nach Anspruch 2 oder 3, **dadurch gekennzeichnet, dass** eine maximale Begrenzung des Druckgradienten stattfindet, wenn sich das Fahrzeug im Stillstand befindet.

5. Elektropneumatische Betriebsbremseinrichtung eines Fahrzeugs, mit wenigstens einem elektrischen Betriebsbremswertgeber (2), einem zentralen elektronischen Steuergerät (14), wenigstens einem ein lokales elektronisches Steuergerät (94) beinhaltenden elektropneumatischen Drucksteller (16, 36, 38) sowie wenigstens einem pneumatischen Betriebsbremszylinder (48, 50), wobei der elektrische Betriebsbremswertgeber (2) auf eine Bremslöseanforderung hin ein Bremslösesignal an das zentrale Steuergerät (14) sendet, welches gemäß dem Bremslösesignal ein einen Soll-Lösebremsdruck repräsentierendes Signal für das lokale Steuergerät (94) des wenigstens einen elektropneumatischen Druckstellers (16, 36, 38) erzeugt, welcher daraufhin einen in dem wenigstens einen Betriebsbremszylinder (48, 50) anstehenden Ist-Bremsdruck auf den Soll-Lösebremsdruck einregelt, **dadurch gekennzeichnet, dass** der wenigstens eine elektropneumatische Drucksteller (16, 36, 38) durch das zentrale elektronische Steuergerät (14) und/oder das lokale elektronische Steuergerät (94) derart angesteuert ist, dass der während des Lösens der Betriebsbremse herrschende Druckgradient aktiv begrenzt wird, wobei der Grad der Begrenzung abhängig von Betriebsbedingungen des Fahrzeugs eingestellt wird und in einem Bereich zwischen keiner Begrenzung und einer maximalen Begrenzung liegt.

6. Elektropneumatische Betriebsbremseinrichtung nach Anspruch 5, **dadurch gekennzeichnet, dass** eine Sensoreinrichtung (82) vorgesehen ist, welche die Betriebsbedingungen repräsentierende Sensorsignale in das zentrale elektronische Steuergerät (14) und/oder das lokale elektronische Steuergerät (94) einsteuert.

7. Elektropneumatische Betriebsbremseinrichtung nach Anspruch 5 oder 6, **dadurch gekennzeichnet, dass** die Betriebsbedingungen des Fahrzeugs wenigstens folgendes beinhalten: Einen aktivierten oder deaktivierten Zustand einer Antriebsschlupfregelung und/oder einer Bremsschlupfregelung und/oder einer ESP-Regelung und/oder ein Anfahren des Fahrzeugs und/oder ein Stillstand des Fahrzeugs und/oder eine Geschwindigkeit des Fahrzeugs.

8. Elektropneumatische Betriebsbremseinrichtung nach Anspruch 7, **dadurch gekennzeichnet, dass** der wenigstens eine elektropneumatische Drucksteller (16, 36, 38) durch das zentrale elektronische Steuergerät (14) und/oder das lokale elektronische Steuergerät (94) derart angesteuert ist, dass keine Begrenzung des während des Lösens der Betriebsbremse herrschenden Druckgradienten stattfindet, wenn die Antriebsschlupfregelung und/oder die Bremsschlupfregelung und/oder die ESP-Regelung aktiviert ist oder wird und/oder wenn ein Anfahren des Fahrzeugs während der Fahrt angefordert wird.

9. Elektropneumatische Betriebsbremseinrichtung nach Anspruch 7, **dadurch gekennzeichnet, dass** der wenigstens eine elektropneumatische Drucksteller (16, 36, 38) durch das zentrale elektronische Steuergerät (14) und/oder das lokale elektronische Steuergerät (94) derart angesteuert ist, dass eine maximale Begrenzung des Druckgradienten stattfindet, wenn sich das Fahrzeug im Stillstand befindet.

10. Elektropneumatische Betriebsbremseinrichtung nach einem der Ansprüche 5 bis 9, **dadurch gekennzeichnet, dass** sie eine elektronisch bremsdruckgeregelte Betriebsbremseinrichtung ist, welche als Drucksteller (16, 36, 38) wenigstens ein Druckregelmodul beinhaltet, in welchen das lokale elektronische Steuergerät (94) integriert ist.

11. Elektropneumatische Betriebsbremseinrichtung nach einem der Ansprüche 5 bis 10, **dadurch gekennzeichnet, dass** sie wenigstens einen elektrischen Drucksensor (80) umfasst, der ein dem in dem wenigstens einen Betriebsbremszylinder (48, 50) herrschenden Bremsdruck entsprechendes Drucksignal in das lokale Steuergerät (94) und/oder in das zentrale Steuergerät (14) einsteuert, welches auf der Basis dieses Signals einen Soll-Ist-Abgleich hinsichtlich des zu erzielenden Soll-Lösebremsdrucks und des zu einzustellenden Druckgradient durchführt.

12. Elektropneumatische Betriebsbremseinrichtung nach den Ansprüchen 10 und 11, **dadurch gekennzeichnet, dass** der Drucksensor (80) in das Druckregelmodul (16, 36, 38) integriert ist.

13. Fahrzeug mit einer elektropneumatischen Betriebsbremseinrichtung nach einem der Ansprüche 5 bis 12.

## Claims

1. Method for controlling an electro-pneumatic service brake device of a vehicle, in which method, starting from an at least partially applied state of the service brake, a target release brake pressure to be obtained for at least partially releasing the service brake is produced by means of at least one electro-pneumatic pressure controller (16, 36, 38) in at least one pneumatic service brake cylinder (48, 50), wherein the production of the target release brake pressure in the at least one pneumatic service brake cylinder (48, 50) takes place with a pressure gradient, **characterized in that** the at least one eletro-pneumatic pressure controller (16, 36, 38) is controlled in such a way that the pressure gradient prevailing during the release of the service brake is actively limited, wherein the degree of limitation is set as a function of operating conditions of the vehicle and lies within a range between no limitation and maximum limitation.

2. Method according to Claim 1, **characterized in that** the operating conditions of the vehicle include at least the following: an activated or deactivated state of a traction control system and/or of a brake slip control system and/or of an ESP control system and/or starting of the vehicle and/or a stationary state of the vehicle and/or a speed of the vehicle.

3. Method according to Claim 2, **characterized in that** no limitation of the pressure gradient occurs during the releasing of the brake if the traction control system and/or the brake slip control system and/or the ESP control system is in an activated state or is activated and/or if starting of the vehicle is requested.

4. Method according to Claim 2 or 3, **characterized in that** maximum limitation of the pressure gradient takes place, if the vehicle is in the stationary state.

5. Electro-pneumatic service brake device of a vehicle, having at least one electric service brake value generator (2), a central electronic control unit (14), at least one electro-pneumatic pressure controller (16, 36, 38), which contains a local electronic control unit (94), and at least one pneumatic service brake cylinder (48, 50), wherein the electric service brake value generator (2) transmits, in response to a brake release request, a brake release signal to the central control unit (14) which generates, according to the brake release signal, a signal which represents a target release brake pressure for the local control unit (94) of the at least one electro-pneumatic pressure controller (16, 36, 38) which in response adjusts an actual brake pressure, present in the at least one service brake cylinder (48, 50), to the target release brake pressure, **characterized in that** the at least one electro-pneumatic pressure controller (16, 36, 38) is actuated by the central electronic control unit (14) and/or the local electronic control unit (94) in such a way that the pressure gradient prevailing during the release of the service brake is actively limited, wherein the degree of limitation is set as a function of operating conditions of the vehicle and lies within a range between no limitation and maximum limitation.

6. Electro-pneumatic service brake device according to Claim 5, **characterized in that** a sensor device (82) is provided which inputs sensor signals representing the operating conditions into the central electronic control unit (14) and/or the local electronic control unit (94).

7. Electro-pneumatic service brake device according to Claim 5 or 6, **characterized in that** the operating conditions of the vehicle include at least the following: an activated or deactivated state of a traction control system and/or of a brake slip control system and/or of an ESP control system and/or starting of the vehicle and/or a stationary state of the vehicle and/or a speed of the vehicle.

8. Electro-pneumatic service brake device according to Claim 7, **characterized in that** the at least one electro-pneumatic pressure controller (16, 36, 38) is actuated by the central electronic control unit (14) and/or the local electronic control unit (94) in such a way that no limitation of the pressure gradient prevailing during the release of the service brake takes place if the traction control system and/or the brake slip control system and/or the ESP control system is in an activated state or is activated and/or if starting of the vehicle is requested during travel.

9. Electro-pneumatic service brake device according to Claim 7, **characterized in that** the at least one electro-pneumatic pressure controller (16, 36, 38) is actuated by the central electronic control unit (14) and/or the local electronic control unit (94) in such a way that maximum limitation of the pressure gradient takes place if the vehicle is in the stationary state.

10. Electro-pneumatic service brake device according to one of Claims 5 to 9, **characterized in that** said service brake device is an electronically brake-pressure-controlled service brake device which includes, as a pressure controller (16, 36, 38), at least one pressure control module in which the local electronic control unit (94) is integrated.

11. Electro-pneumatic service brake device according to one of Claims 5 to 10, **characterized in that** said service brake device comprises at least one electric pressure sensor (80) which inputs a pressure signal corresponding to the brake pressure prevailing in the at least one service brake cylinder (48, 50) into the local control unit (94) and/or into the central control unit (14) which carries out, on the basis of this signal, a target/actual comparison with respect to the target release brake pressure to be achieved and the pressure gradient to be set.

12. Electro-pneumatic service brake device according to Claims 10 and 11, **characterized in that** the pressure sensor (80) is integrated into the pressure control module (16, 36, 38).

13. Vehicle having an electro-pneumatic service brake device according to one of Claims 5 to 12.

## Revendications

1. Procédé de commande d'un dispositif électropneumatique de frein de service d'un véhicule, dans lequel, à partir d'un état serré, au moins partiellement, du frein de service, on produit, au moyen d'au moins un régleur (16, 36, 38) électropneumatique de pression, dans au moins un cylindre (48, 50) de frein de service, une pression de frein de desserrage de consigne à obtenir pour desserrer, au moins en partie, le frein de service, la production de la pression de frein de desserrage de consigne dans le au moins un cylindre (48, 50) pneumatique de frein de service s'effectuant avec un gradient de pression, **caractérisé en ce que** l'on commande le au moins un régleur (16, 36, 38) électropneumatique de pression, de manière à limiter activement le gradient de pression régnant pendant le desserrage du frein de service, le degré de limitation étant réglé en fonction des conditions de fonctionnement du véhicule et se trouvant dans une plage comprise entre pas de limitation et une limitation maximum.

2. Procédé suivant la revendication 1, **caractérisé en ce que** les conditions de service du véhicule comportent au moins ce qui suit : un état activé ou désactivé d'une régulation de glissement d'entraînement et/ou d'une régulation de glissement de freinage et/ou d'une régulation ESP et/ou un démarrage du véhicule et/ou un arrêt du véhicule et/ou une vitesse du véhicule.

3. Procédé suivant la revendication 2, **caractérisé en ce qu'**une limitation du gradient de pression n'a pas lieu pendant le desserrage du frein, si la régulation de glissement d'entraînement et/ou la régulation ESP est activée et/ou si un démarrage du véhicule est demandé.

4. Procédé suivant la revendication 2 ou 3, **caractérisé en ce qu'**une limitation maximum du gradient de pression a lieu si le véhicule se trouve à l'arrêt.

5. Dispositif électropneumatique de frein de service d'un véhicule, comprenant au moins un indicateur (2) électrique de valeur de frein de service, un appareil (14) électronique centrale de commande, au moins un appareil (94) électronique local de commande, comportant un régleur (16, 36, 38) électropneumatique de pression, ainsi qu'au moins un cylindre (48, 50) pneumatique de frein de service, l'indicateur (2) électrique de valeur de frein de service envoyant, sur une demande de desserrage de frein, un signal de desserrage de frein à l'appareil (14) central de commande, qui, conformément au signal de desserrage de frein, produit un signal, représentant la pression de frein de desserrage de consigne, pour l'appareil (94) local de commande du au moins un régleur (16, 36, 38) électropneumatique de pression, lequel ensuite règle à la pression de freinage de desserrage de consigne une pression de freinage réelle s'appliquant au au moins un cylindre (48, 50) de frein de service, **caractérisé en ce que** le au moins un régleur (16, 36, 38) électropneumatique de pression est commandé par l'appareil (14) électronique central de commande et/ou par l'appareil (94) électronique local de commande, de manière à limiter activement le gradient de pression régnant pendant le desserrage du frein de service, le degré de limitation étant réglé en fonction des conditions de fonctionnement de véhicule et se trouvant dans une plage comprise entre pas de limitation et une limitation maximum.

6. Dispositif électropneumatique de frein de service suivant la revendication 5, **caractérisé en ce qu'**il est prévu un dispositif (82) formant capteur, qui envoie des signaux de capteur représentant des conditions de fonctionnement à l'appareil (14) électronique centrale de commande et/ou à l'appareil (94) électronique local de commande.

7. Dispositif électropneumatique de frein de service suivant la revendication 5 ou 6, **caractérisé en ce que** les conditions de service du véhicule comportent au moins ce qui suit : un état activé ou désactivé d'une régulation de glissement d'entraînement et/ou d'une régulation de glissement de freinage et/ou d'une régulation ESP et/ou un démarrage du véhicule et/ou un arrêt du véhicule et/ou une vitesse du véhicule.

8. Dispositif électropneumatique de frein de service suivant la revendication 7, **caractérisé en ce que** le au moins un régleur (16, 36, 38) électropneumatique de pression est commandé par l'appareil (14) électronique central de commande et/ou par l'appareil (94) électronique.local de commande, de manière à ce qu'il ne se produise pas de limitation du gradient de pression régnant pendant le desserrage du frein de service si la régulation du glissement d'entraînement et/ou la régulation de glissement de freinage et/ou la régulation ESP est activée et/ou s'il est demandé un démarrage du véhicule pendant le trajet.

9. Dispositif électropneumatique de frein de service suivant la revendication 7, **caractérisé en ce que** le au moins un régleur (16, 36, 38) électropneumatique de pression est commandé par l'appareil (14) électronique central de commande et/ou par l'appareil (94) local électronique de commande, de manière à produire une limitation maximum du gradient de pression si le véhicule se trouve à l'arrêt.

10. Dispositif électropneumatique de frein de service suivant l'une des revendications 5 à 9, **caractérisé en ce que** c'est un dispositif de frein de service à régulation de la pression de freinage par voie électronique, qui comporte comme régleur (16, 36, 38) de pression au moins un module de régulation de la pression intégré à l'appareil (94) électronique local de commande.

11. Dispositif électropneumatique de frein de service suivant l'une des revendications 5 à 10, **caractérisé en ce qu'**il comprend au moins un capteur (80) électrique de pression, qui envoie à l'appareil (94) local de commande et/ou à l'appareil (14) central de commande un signal de pression correspondant à la pression de freinage régnant dans le au moins un cylindre (48, 50) de frein de service, appareil qui, sur la base de ce signal, effectue une égalisation consigne-réelle en ce qui concerne la pression de freinage de desserrage de consigne à obtenir et le gradient de pression à régler.

12. Dispositif électropneumatique de frein de service suivant les revendications 10 et 11, **caractérisé en ce que** le capteur (30) de pression est intégré au module (16, 36, 38) de régulation de la pression.

13. Véhicule ayant un dispositif électropneumatique de frein de service suivant l'une des revendications 5 à 12.
